# EUROPÄISCHE PATENTSCHRIFT

(11) **EP 2 762 839 B1**
(45) Veröffentlichungstag und Bekanntmachung des Hinweises auf die Patenterteilung: **02.11.2016**
(21) Anmeldenummer: 13153368.9
(22) Anmeldetag: 30.01.2013
(51) Int. Cl.: G01D 11/24, H01R 13/73

(54) **Adaptervorrichtung mit einer mechanischen Schnittstelle für ein Messgerätegehäuse**
Adapter device with a mechanical interface for a measuring device housing
Dispositif d'adaptateur doté d'une interface mécanique pour un boîtier d'appareil de mesure

(43) Veröffentlichungstag der Anmeldung: 06.08.2014
(73) Patentinhaber: VEGA Grieshaber KG, 77709 Wolfach (DE)
(72) Erfinder: Ohmayer, Gerd, 77716 Haslach (DE); Falk, Johannes, 78112 St. Georgen (DE)
(74) Vertreter: Westphal, Mussgnug & Partner Patentanwälte mbB

(56) Entgegenhaltungen:
- WO-A2-2007/073876
- US-A- 4 662 210

## Beschreibung

Die Erfindung betrifft eine Adaptervorrichtung mit einer mechanischen Schnittstelle nach dem Oberbegriff des Patentanspruchs 1 sowie ein Messgerätegehäuse mit einer erfindungsgemäßen Adaptervorrichtung.

Die Serienfertigung von Messgeräten, insbesondere von Füllstands- und Druckmessgeräten wird erleichtert, indem möglichst viele Bauteile und Komponenten der Messgeräte standardisiert werden. Dies gilt vor allem für die Funktionen, die für die eigentliche Messaufgabe zuständig sind.

Jedoch ist es gelegentlich erforderlich, dass Standardmessgeräte mit zusätzlichen Funktionen bereitgestellt werden müssen, die mittels Zusatzbaugruppen realisiert werden. Da für diese Zusatzbaugruppen ein zusätzlicher Einbauraum nötig ist, werden diese Zusatzbaugruppen oftmals lose, d. h. je nach Platzverhältnissen in Hohlräumen im Gehäuse des Messgerätes zwischen der Elektronikbaugruppe als Hauptbaugruppe und der Gehäusewand nicht positionsfest verstaut und sind daher der Gefahr einer Beschädigung durch die umgebenden Bauteile aufgrund von bspw. scharfen Kanten oder heißen Oberflächen ausgesetzt. Ferner ist auch nicht zu verhindern, dass bei der Montage solcher Zusatzbaugruppen erhöhte Montagekräfte auftreten, die ebenso zu einer Beschädigung, vor allem der elektrischen Schnittstellen führen können.

Des Weiteren ist es gelegentlich erforderlich, bei einem standardisierten Füllstands- oder Druckmessgerät dessen Gehäuselänge zu verlängern, infolgedessen auch die elektrischen Verbindungsleitungen zwischen der Elektronikbaugruppe und der Sensoreinheit verlängert werden müssen. Aus Kostengründen muss dabei auf ein anderes preisgünstiges Verbindungssystem zurückgegriffen werden, so dass zur Realisierung einer Adapterfunktion zwischen den unterschiedlichen Verbindungssystemen ebenso eine Zusatzbaugruppe erforderlich ist. Auch die Schirmung von Verbindungsleitungen zur Sensoreinheit bzw. von Antriebsleitungen zum Sensor bei großen Längen erfordert oftmals einen anderen Aufbau, der einen Wechsel von der Standardausführung der Verbindungs- bzw. Leitungstechnik zu einer anderen Verbindungstechnik erforderlich macht und hierzu ebenso eine die Adapterfunktion zwischen den unterschiedlichen Leitungstechniken realisierende Zusatzbaugruppe notwendig ist.

Eine als Elektronikmodul ausgebildete Adaptervorrichtung ist aus der WO 2007/073876 A2 bekannt, welche zur Bildung einer Elektronikeinsatz-Anordnung für ein Messgerät mittels einer als Befestigungseinrichtung ausgebildeten mechanischen Schnittstelle über eine Befestigungseinrichtung eines Elektronikeinsatzes mit demselben mechanisch lösbar verbunden wird. Ferner weist sowohl der Elektronikeinsatz als auch das Elektronikmodul eine elektrische Schnittstelle auf, die miteinander elektrisch verbunden werden. Die beiden Befestigungseinrichtungen des Elektronikeinsatzes und des Elektronikmoduls sind zu einer Kopplung derselben derart in Eingriff bringbar, dass ein Abstand zwischen den beiden elektrischen Schnittstellen bei einer Bewegung des Elektronikeinsatzes im Wesentlichen konstant bleibt. Der Elektronikeinsatz ist zur Ausführung von Prozessen einer ersten Funktionalität und das Elektronikmodul zu einer Ausführung von Prozessen einer zweiten Funktionalität eingerichtet.

Weiteren Stand der Technik offenbart die US 4 662 210 A, die sich mit einer Elektronikeinsatzanordnung für ein Messgerätgehäuse beschäftigt.

Neben dem hohen konstruktiven Aufwand zur Herstellung der beiden Befestigungseinrichtungen können mit diesen bekannten Befestigungseinrichtungen nicht alle oben genannten Nachteile bei dem Erfordernis einer Zusatzbaugruppe beseitigt werden.

Ausgehend von diesem Stand der Technik ist es Aufgabe der vorliegenden Erfindung, eine Adaptervorrichtung der eingangs genannten Art derart weiterzubilden, dass zum einen eine vor Schädigungen schützende, positionsfeste Fixierung der Adaptervorrichtung als Zusatzbaugruppe in dem Messgerätegehäuse mit kostengünstigen und einfach herzustellenden Mitteln ermöglicht wird und zum anderen eine breite Anwendungsmöglichkeit zur Verfügung gestellt wird, ohne dass dadurch eine komplexe Montageaktivität entsteht.

Diese Aufgabe wird gelöst durch eine Adaptervorrichtung mit den Merkmalen des Patentanspruchs 1.

Eine solche Adaptervorrichtung mit einer mechanischen Schnittstelle sowie mit einer elektrischen Schnittstelle zum elektrischen Verbinden mit einem Elektronikeinsatz eines eine Sensoreinheit aufweisenden Messgerätegehäuses zeichnet sich erfindungsgemäß dadurch aus, dass
- die Adaptervorrichtung ein Trägerelement umfasst, und
- die mechanische Schnittstelle für ein mechanisches Fixieren der Adaptervorrichtung an einer Schnittstellenaufnahme des Elektronikeinsatzes und/oder des Messgerästegehäuses als eine das Trägerelement der Adaptervorrichtung teilweise umgebende, elastische und nicht elektrisch leitfähige Vergussmasse mit wenigstens einem im Wesentlichen konturgenau an die Schnittstellenaufnahme angepassten und eine fixierende Wirkverbindung mit derselben herstellendes Konturelement ausgebildet ist.

Durch die Herstellung des Konturelementes zusammen mit der Vergussmasse durch Umspritzen des Trägerelementes der Adaptervorrichtung sind beliebig gestaltbare Konturen oder Geometrien realisierbar, so dass die Adaptervorrichtung in jeder Position innerhalb des Messgerätegehäuses an die als Schnittstellenaufnahme dienende Geometrie des Elektronikeinsatzes und/oder des Gerätegehäuses angepasst und dadurch positionsfest innerhalb des Gerätegehäuses fixiert wird. Die fixierende Wirkverbindung des Konturelementes kann in vielfacher Weise realisiert werden, wie zum Beispiel durch Verklemmen, Abstützen oder Verkrallen an der Kontur der Schnittstellenaufnahme des Elektronikeinsatzes und/oder des Messgerätegehäuses oder durch Verrasten mittels Rastelementen mit der Schnittstellenaufnahme des Elektronikeinsatzes und/oder des Gerätegehäuses. Zur Fixierung dieser Adaptervorrichtung innerhalb des Messgerätegehäuses sind daher keine zusätzlichen Arbeitsschritte wie ein Verkleben, Verschweißen oder Vernieten oder weitere Bauteile, wie bspw. Verbindungsmittel erforderlich.

Solche erfindungsgemäße Adaptervorrichtungen können kostengünstig mittels entsprechender Verguss-Werkzeuge hergestellt werden.

Mit diesen erfindungsgemäßen Adaptervorrichtungen können Standard-Messgeräte in ihren Funktionen oder in ihrem Aufbau kostengünstig erweitert oder angepasst werden. Ferner werden mit der erfindungsgemäßen Fixierung mittels eines Konturelementes des Vergusses auf die Adaptervorrichtung einwirkende Montagekräfte vermieden, zumindest aber reduziert. Schließlich wird ein Vibrationsschutz und damit auch ein Schutz vor Abrieb sowie ein Schutz vor heißen Oberflächen im Betrieb und vor Feuchtigkeit, vor allem während der Montage und der Demontage der Adaptervorrichtung erreicht.

In einer besonders vorteilhaften Ausgestaltung der Erfindung ist das Konturelement mit einem Schlitz zur randseitigen und elastisch klemmenden Aufnahme eines die Schnittstellenaufnahme bildenden plattenartigen Trägers des Elektronikeinsatzes ausgebildet. Damit kann in einem einfachen Montageschritt die Adaptervorrichtung auf den plattenartigen Träger, bspw. eine Leiterplatte des Elektronikeinsatzes klemmend aufgesteckt werden, um somit die Adaptervorrichtung positionsfest an dem Elektronikeinsatz zu fixieren bzw. zu arretieren.

Erfindungsgemäß ist es vorgesehen, dass das Konturelement zur zentrischen Fixierung in dem Messgerätegehäuse mit einer an der die Schnittstellenaufnahme bildenden Innenwandung des Messgerätegehäuses wenigstens teilweise anliegenden und sich elastisch abstützenden Kontur ausgebildet ist. Damit kann eine solche Adaptervorrichtung mittels des derart ausgebildeten Konturelementes in das Messgerätegehäuse durch Anliegen an dessen Innenwandung eingeklemmt werden, so dass sich das Konturelement und somit das die Adaptervorrichtung gegen die Innenwandung elastisch abstützen kann. Weiterbildungsgemäß kann dabei das Konturelement plattenförmig mit einer im Wesentlichen an die Querschnittsform des Messgerätegehäuses angepassten Kontur ausgeformt werden, vorzugsweise ist das Konturelement sternförmig mit einer im Wesentlichen an die Querschnittsform des Messgerätegehäuses angepasster radialer Kontur ausgebildet.

In einer weiteren Ausgestaltung der Erfindung ist das Konturelement mit Fixiermitteln, vorzugsweise mit Stiften, Absätzen und/oder Rasthaken ausgebildet, welche an entsprechenden Fixieraufnahmemitteln der Schnittstellenaufnahme eingreifen. Weiterhin ist weiterbildungsgemäß das Trägerelement als Trägerplatte, vorzugsweise als Leiterplatte ausgebildet.

Besonders vorteilhaft ist es, die Trägerplatte als flexible Leiterplatte mit wenigstens einer Leiterbahn auszubilden. Damit wird der Aufbau der erfindungsgemäßen Adaptervorrichtung wesentlich vereinfacht. So dient diese flexible Leiterplatte gleichzeitig zur Realisierung einer Adapterfunktion zwischen zwei unterschiedlichen Verbindungs- bzw. Leitungstechniken. Auch ist es möglich, auf dieser flexiblen Leiterbahn elektronische Bauelemente anzuordnen.

Die Adaptervorrichtung ist gemäß einer Weiterbildung der Erfindung zum elektrischen Verbinden mit der Sensoreinheit mit einer weiteren elektrischen Schnittstelle ausgebildet.

Die erfindungsgemäße Adaptervorrichtung ist besonders für Messgerätegehäuse, vorzugsweise für Füllstandmessgeräte oder Druckmessgeräte geeignet.

Die Erfindung wird nachstehend anhand von Ausführungsbeispielen unter Bezugnahme auf die beigefügten Figuren ausführlich beschrieben. Es zeigen:
- Figur 1: eine schematische Darstellung eines Füllstandmessgerätes mit einer erfindungsgemäßen Adaptervorrichtung,
- Figur 2: eine perspektivische und schematische Darstellung des Details A gemäß Figur 1 mit einem Ausführungsbeispiel der erfindungsgemäßen Adapteranordnung,
- Figur 3: eine perspektivische und schematische Darstellung der Adaptervorrichtung nach Figur 2,
- Figur 4: eine perspektivische und schematische Schnittdarstellung des einen Elektronikeinsatz des Messgerätes nach Figur 1 aufnehmenden Elektronikgehäuses mit einem weiteren Ausführungsbeispiel der erfindungsgemäßen Adaptervorrichtung,
- Figur 5: eine perspektivische und schematische Darstellung der Adaptervorrichtung nach Figur 4,
- Figur 6: eine perspektivische und schematische Darstellung eines einen Elektronikeinsatz aufnehmenden Elektronikgehäuses nach Figur 4 mit einem weiteren Ausführungsbeispiel der erfindungsgemäßen Adaptervorrichtung,
- Figur 7: eine perspektivische und schematische Längsschnittdarstellung des Elektronikgehäuses nach Figur 6,
- Figur 8: eine perspektivische und schematische Darstellung der Adaptervorrichtung nach Figur 7,
- Figur 9: eine perspektivische und schematische Darstellung eines weiteren Ausführungsbeispiels der erfindungsgemäßen Adaptervorrichtung mit einer an die elektrische Schnittstelle angeschlossenen konfektionierten Leitung, und
- Figur 10: eine Darstellung der als Trägerelement der Adaptervorrichtung nach Figur 9 verwendeten flexiblen Leiterplatte mit einer elektrischen Schnittstelle.

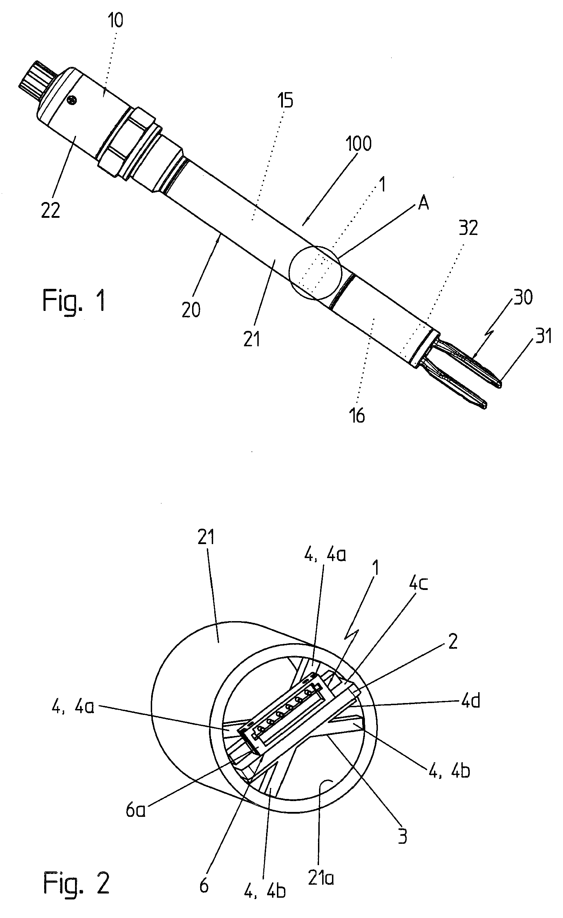

Figur 1 zeigt ein Füllstandmessgerät 100, welches zur Detektion von Flüssigkeiten als sogenannter Vibrationsresonator mit einem piezoelektrischen Antriebssystem ausgebildet ist, welches in der Regel ein Piezoelement zur mechanischen Schwingungsanregung, beispielsweise mittels einer Schwinggabelmembran aufweist.

Das Füllstandmessgerät 100 gemäß Figur 1 umfasst eine Schwingungsvorrichtung als Sensoreinheit 30 mit einem Gabelschwinger 31 und einer von einem Messrohr 21 eines Messgerätegehäuses 20 aufgenommenen Antriebsvorrichtung 32. Das Messgerätegehäuse 20 umfasst neben dem Messrohr 21 ein Elektronikgehäuse 22 zur Aufnahme eines Elektronikeinsatzes 10, welches einerseits die Antriebsvorrichtung 32 ansteuert und welchem andererseits zur Auswertung die von der Schwingungsvorrichtung 30 erzeugten Sensorsignale zugeführt werden. Hierzu wird der Elektronikeinsatz 10 mittels einer elektrischen Verbindungsleitung 15 über eine Adaptervorrichtung 1 mit der Schwingungsvorrichtung 30 verbunden, wobei diese Adaptervorrichtung 1 über eine Verbindungsleitung 16 an die Antriebsvorrichtung 32 angeschlossen ist.

Das Füllstandmessgerät 100 gemäß Figur 1 stellt eine Sonderausführung dar, die aus einer Standardausführung abgeleitet ist. Der Unterschied zu dieser Standardausführung besteht darin, dass entweder ein Messrohr 21 nicht vorgesehen ist oder ein solches Messrohr 21 wesentlich kürzer ausgeführt ist. Um eine solche Sonderausführung kostengünstig aufbauen zu können, ohne dass die bestehenden Baugruppen der Standardausführung kostenaufwändig geändert werden müssen, wird die Adaptervorrichtung 1 gemäß der Erfindung eingesetzt, um die entsprechende Anpassung zu realisieren.

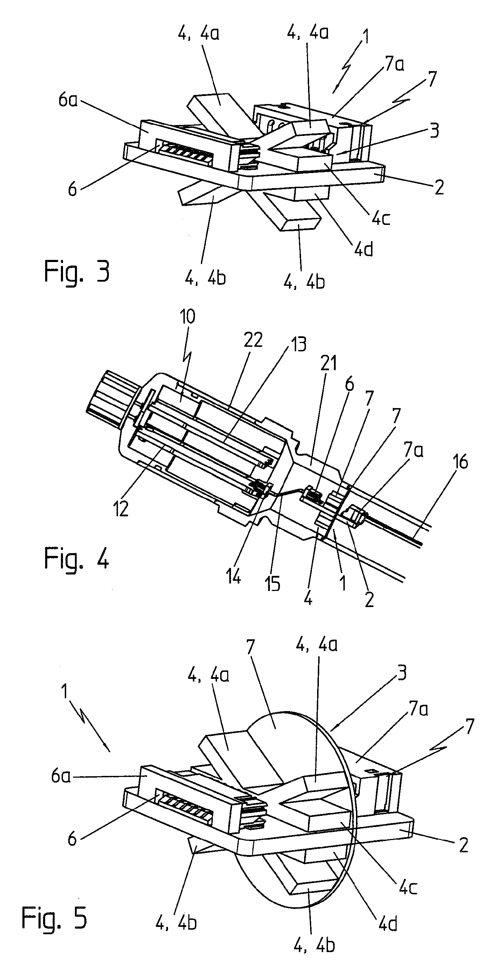

Gemäß Figur 1 stellt eine solche Adaptervorrichtung 1 die elektrische Verbindung zwischen dem von dem Elektronikgehäuse 22 aufgenommenen Elektronikeinsatz 10 und der Sensoreinheit 30 her, wobei diese Adaptervorrichtung 1 im zur Sensoreinheit 30 benachbarten Bereich A des Messrohres 21 angeordnet ist und über eine Verbindungsleitung 15 elektrisch mit dem Elektronikeinsatz 10 verbunden ist. Im Detail ist dieser Bereich A in Figur 2 mit einem Rohrstück des Messrohres 21 und der Adaptervorrichtung 1 dargestellt. Diese Adaptervorrichtung 1 zeigt Figur 3 in einer anderen Perspektive.

Die Adaptervorrichtung 1 umfasst eine Leiterplatte als Trägerelement 2 mit einer elektrischen Schnittstelle 6 und einer weiteren elektrischen Schnittstelle 7, die jeweils als Klemmverbinder 6a bzw. 7a ausgeführt sind. Diese beiden Klemmverbinder 6a und 7a sind über auf der Leiterplatte 2 geführte Leiterbahnen (in den Figuren nicht dargestellt) elektrisch miteinander verbunden.

Zur Herstellung einer mechanischen Schnittstelle 3 wird die Leiterplatte 2 teilweise umspritzt, so dass entsprechend von Figur 2 eine elastische und nicht elektrisch leitfähige Vergussmasse 3 mit einem Konturelement 4 entsteht, mittels dem die Adaptervorrichtung 1 an der Innenwandung 21a als Schnittstellenaufnahme des Messrohres 21 bzw. des Messgerätegehäuses 20 verklemmt wird und sich dadurch mittels diesem Konturelement 4 gegen die Innenwandung 21a abstützt. Die Adaptervorrichtung 1 ist somit in dem Messrohr 21 positionsfest und zentriert fixiert und gegen Berührung mit dem umgebenden Messrohr 21 geschützt. Außerdem wird eine Zug- und Druckentlastung der Adaptervorrichtung 1 erreicht.

Diese zentrische Fixierung der Adaptervorrichtung 1 wird mittels eines sternförmigen Konturelementes 4 der Vergussmasse 3 realisiert, wobei die Sternform von vier Konturarmen 4a und 4b gebildet wird. Es sind hier auch andere Konturen denkbar. Im in das Messrohr 21 eingebauten Zustand erstrecken sich die vier Konturarme 4a und 4b in Bezug auf das Messrohr 21 in radialer Richtung, so dass die Stirnflächen an den Enden dieser Konturarme 4a und 4b elastisch an der Innenwandung 21a anliegen. Dem Innendurchmesser des Messrohres 21 entspricht die Breite der Leiterplatte 2 und die Länge von zwei stegförmigen Vergusskörpern 4c und 4d. Diese beiden sternförmigen Vergusskörper 4c und 4d sind mittig zwischen den beiden Klemmverbindern 6a und 7a auf gegenüberliegenden Oberflächen der Leiterplatte 2 geführt und tragen jeweils zwei Konturarme 4a und 4b. Zur Bildung der Sternform erstrecken sich die beiden Konturarme 4a bzw. 4b jeweils mittig von dem Vergusskörper 4c bzw. 4b ausgehend radial nach außen.

Ein weiteres Ausführungsbeispiel zeigt Figur 4, die das mit dem anderen Ende des Messrohres 21 verbundene Elektronikgehäuse 22 zur Aufnahme des Elektronikeinsatzes 10 darstellt. In diesem Endbereich des Messrohres 21 ist in der der Figur 2 entsprechenden Weise ebenso eine Adaptervorrichtung 1 eingeklemmt, welche sich jedoch von der in Figur 3 dargestellten Ausführung dadurch unterscheidet, dass die Vergussmasse 3 mit den sternförmigen Konturarmen als Konturelement 4 zusätzlich eine Dichtscheibe 7 aufweist, wie dies in Figur 5 dargestellt ist.

Diese Dichtscheibe 7 entspricht der Querschnittsform des von der Innenwandung 21a gebildeten Querschnittes des Messrohres 21 und ist durch Umgießen der Leiterplatte 2 zusammen mit der Vergussmasse 3 einstückig hergestellt.

Mit einer solchen Dichtscheibe 7 wird ein Eindringen von Feuchtigkeit in den Bereich des Elektronikeinsatzes 10 verhindert. Die sternförmige Ausbildung des Konturelementes 4 kann auch vollständig durch eine solche Dichtscheibe 7 ersetzt werden. Ferner ist es auch möglich, die Leiterplatte 2 vollständig zu umspritzen, so dass lediglich die an der Innenwandung 21a anliegende Stirnseite der Leiterplatte 2 frei bleibt. Dadurch wird zusätzlich die Leiterplatte 2, insbesondere wenn auf dieser Leiterplatte 2 elektrische bzw. elektronische Bauelemente angeordnet sind, vor Feuchtigkeit geschützt.

Gemäß Figur 4 umfasst die Elektronikeinheit 10 zwei mit elektrischen und/oder elektronischen Bauelementen bestückten Leiterplatten 12 und 13, wobei die Leiterplatte 12 eine elektrische Schnittstelle 14 aufweist, über die mittels einer Verbindungsleitung 15 die elektrische Verbindung mit der elektrischen Schnittstelle 6 der Adaptervorrichtung 1 hergestellt wird. Über die weitere elektrische Schnittstelle 7 der Adaptervorrichtung 1 wird, wie oben beschrieben, mittels einer weiteren Leitung 16 die Adaptervorrichtung 1 mit der Sensoreinheit 30 des Messgerätes 100 elektrisch verbunden.

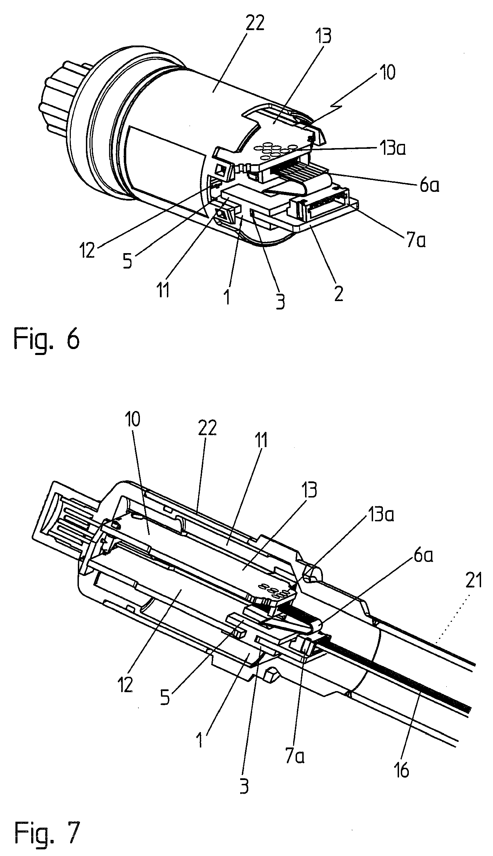

Die Figuren 6, 7 und 8 zeigen ein weiteres Ausführungsbeispiel einer Adaptervorrichtung 1 mit einer ebenso als Vergussmasse 3 ausgebildeten mechanischen Schnittstelle, wobei jedoch die zugehörige Schnittstellenaufnahme nicht von der Innenwandung 21 des Messrohres 21, sondern von einer Leiterplatte 12 des Elektronikeinsatzes 10, nämlich von deren stirnseitigen Bereich 11 gebildet wird.

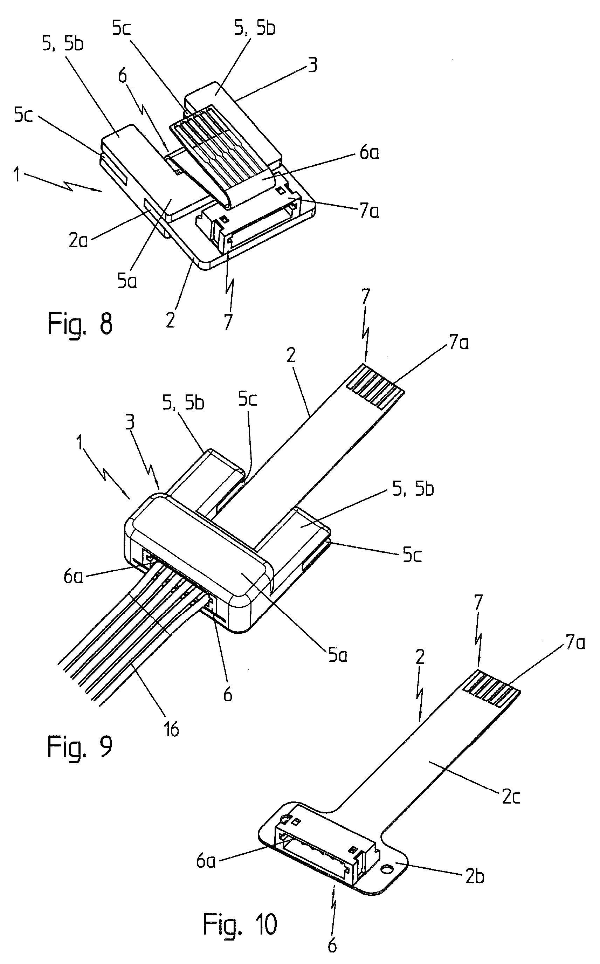

Die Adaptervorrichtung 1 gemäß Figur 8 umfasst ebenso eine Leiterplatte 2 mit einer elektrischen Schnittstelle 6 und einer weiteren elektrischen Schnittstelle 7. Die elektrische Schnittstelle 6 wird von einer flexiblen Leiterplatte 6a gebildet, während die weitere Schnittstelle 7 als Klemmverbinder 7a ausgebildet ist.

Die mechanische Schnittstelle wird ebenso von einer Vergussmasse 3 mit Konturelementen 5 durch eine Umspritzung des schnittstellenseitigen Randbereiches 2a der Leiterplatte 2 realisiert. In der Ebene der Leiterplatte 2 weist die Vergussmasse 3 eine U-Form auf, bestehend aus einem Querteil 5a, welches zwei Schenkelteile 5b verbindet. Das Querteil 5a umschließt den Randbereich 2a der Leiterplatte 2 taschenartig, während die beiden Schenkelteile 5b als Konturelement 5 jeweils einen Schlitz 5c aufweisen, dessen Breite ungefähr der Dicke der Leiterplatte 12 der Elektronikeinheit 10 entspricht und daher auf den die Schnittstellenaufnahme 11 bildenden Rand der Leiterplatte 12 klemmend aufgesteckt werden können, so dass dieser Randbereich 11 von dem beiden Schenkelteilen 5b umfasst wird und die Adaptervorrichtung 1 gegenüber der Elektronikeinheit 10 positionsfest fixiert wird.

Die elektrische Schnittstelle 6 der Adaptervorrichtung 1 wird über die flexible Leiterplatte 6a mit einer elektrischen Schnittstelle 13a der weiteren Leiterplatte 13 der Elektronikeinheit 10 verbunden.

Die Figuren 9 und 10 zeigen eine alternative Ausführung der Adaptervorrichtung gemäß Figur 8, bei der die steife Leiterplatte 2 gemäß Figur 8 durch eine flexible Leiterplatte ersetzt ist, jedoch ein Endbereich dieser flexiblen Leiterplatten 2 ebenso eine U-förmige Vergussmasse 3 als mechanische Schnittstelle aufweist.

Diese flexible Leiterplatte 2 ist gemäß Figur 10 mit einer T-Form ausgebildet, wobei an dem Querteil 2b dieser T-Form zur Bildung einer elektrischen Schnittstelle 6 mit einem Klemmverbinder 6a bestückt ist. Das freie Ende des Längsteils 2c dieser T-Form bildet eine weitere elektrische Schnittstelle 7 mit entsprechenden Anschlusskontakten 7a.

Die U-förmige Vergussmasse 3 umfasst entsprechend derjenigen nach Figur 8 als Konturelement zwei Schenkelteile 5b mit jeweils einem Schlitz 5c, die durch ein Querelement 5a verbunden werden, wobei dieses Querelement 5a als Umguss das Querteil 2b der flexiblen Leiterplatte 2 bis auf den Zugang zu den Klemmenkontakten der Klemmverbindung 6a vollständig umschließt, so dass das Längsteil 2c der flexiblen Leiterplatte 2 sich zwischen die beiden Schenkelteile 5b erstreckt.

Damit kann diese Adaptervorrichtung 1 gemäß Figur 9 anstelle der Adaptervorrichtung 1 gemäß Figur 8 im Randbereich der Leiterplatte 12, der die Schnittstellenaufnahme 11 für die als Vergussmasse 3 mit Konturelement 5 ausgebildete mechanische Schnittstelle darstellt, aufgesteckt werden, wie dies im Zusammenhang mit der Adaptervorrichtung 1 gemäß Figur 8 in den Figuren 6 und 7 dargestellt ist. Gemäß Figur 10 wird der Klemmverbinder 6a der elektrischen Schnittstelle 6 mittels einer konfektionierten Leitungen 16 mit der Sensoreinheit 30 verbunden, während die weitere elektrische Schnittstelle 7 mit den Kontakten 7a der flexiblen Leiterplatte 2 mit der elektrischen Schnittstelle 13a der Leiterplatte 13 der Elektronikeinheit 10 elektrisch verbunden wird.

Zur Verbesserung der positionsfesten Fixierung innerhalb des Messgerätegehäuses 20 des Messgerätes 100, das auch als Druckmessgerät ausgebildet sein kann, kann die Vergussmasse 3 bzw. die Konturelemente 4 bzw. 5 auch mit Stiften, Absätzen und/oder Rasthaken ausgeführt sein, die an einem entsprechenden Gegenstück der Schnittstellenaufnahme 11 bzw. 21a verkrallen, einrasten und/oder verklemmen.
Die Vergussmasse 3 als mechanische Schnittstelle kann kostengünstig durch Umspritzen durch Hotmelting-Moulding des Trägerelementes 2 der Adaptervorrichtung 1 mittels eines geeigneten thermoplastischen Vergussmaterials realisiert werden.

Das Trägerelement der erfindungsgemäßen Adaptervorrichtung 1 kann mit oder ohne elektrische und/oder elektronische Bauteile eingesetzt werden.

Bezugszeichen
- 1: Adaptervorrichtung
- 2: Trägerelement, Leiterplatte, flexible Leiterplatte der Adaptervorrichtung 1
- 2a: Randbereich der Leitplatte 2
- 2b: Querteil der T-förmigen flexiblen Leiterplatte 2
- 2c: Längsteil der T-förmigen flexiblen Leiterplatte 2
- 3: mechanische Schnittstelle, Vergussmasse
- 4: Konturelement
- 4a: Konturarm des Konturelementes 4
- 4b: Konturarm des Konturelementes 4
- 4c: Vergusskörper der Vergussmasse
- 4d: Vergusskörper der Vergussmasse
- 5: Konturelement
- 5a: Querteil des Konturelementes 5
- 5b: Schenkelteil des Konturelementes 5
- 6: elektrische Schnittstelle der Adaptervorrichtung 1
- 6a: Klemmverbinder der Schnittstelle 6
- 7: weitere elektrische Schnittstelle der Adaptervorrichtung 1
- 7a: Klemmverbinder der Schnittstelle 7
- 7b: flexible Leiterplatte der Schnittstelle 7
- 8: Dichtscheibe

- 10: Elektronikeinsatz
- 11: Schnittstellenaufnahme des Elektronikeinsatzes 10
- 12: Leiterplatte des Elektronikeinsatzes 10
- 13: Leiterplatte des Elektronikeinsatzes 10
- 13a: elektrische Schnittstelle der Leiterplatte 13
- 14: elektrische Schnittstelle
- 15: Verbindungsleitung
- 16: Verbindungsleitung
- 20: Messgerätegehäuse
- 21: Messrohr des Messgerätegehäuses 20
- 21a: Schnittstellenaufnahme, Innenwandung des Messgerätegehäuses 20
- 22: Elektronikgehäuse des Messgerätegehäuses 20

- 30: Sensoreinheit
- 31: Gabelschwinger der Sensoreinheit 30
- 32: Antriebsvorrichtung der Sensoreinheit 30

- 100: Füllstandmessgerät

## Patentansprüche

1. Adaptervorrichtung (1) mit einer mechanischen Schnittstelle (3) sowie mit einer elektrischen Schnittstelle (6) zum elektrischen Verbinden mit einem Elektronikeinsatz (10) eines eine Sensoreinheit (30) aufweisenden Messgerätegehäuses (20),
wobei
- die Adaptervorrichtung (1) ein Trägerelement (2) umfasst, und
- die mechanische Schnittstelle für ein mechanisches Fixieren der Adaptervorrichtung (1) an einer Schnittstellenaufnahme (11, 21a) des Elektronikeinsatzes (10) und/oder des Messgerätegehäuses (20) als eine das Trägerelement (2) der Adaptervorrichtung (1) teilweise umgebende, elastische und nicht elektrisch leitfähige Vergussmasse (3) mit wenigstens einem im Wesentlichen konturgenau an die Schnittstellenaufnahme (11, 21a) angepassten und eine fixierende Wirkverbindung mit derselben herstellendes Konturelement (4, 5) ausgebildet ist, **dadurch gekennzeichnet, dass** das Konturelement (4) zur zentrischen Fixierung der Adaptervorrichtung in dem Messgerätegehäuse (20) mit einer an der die Schnittstellenaufnahme bildenden Innenwandung (21a) des Messgerätegehäuses (20) wenigstens teilweise anliegenden und sich elastisch abstützenden Kontur ausgebildet ist.

2. Adaptervorrichtung (1) nach Anspruch 1,
**dadurch gekennzeichnet, dass** das Konturelement (5) mit einem Schlitz (5c) zur randseitigen und elastisch klemmenden Aufnahme eines die Schnittstellenaufnahme (11) bildenden plattenartigen Trägers (12) des Elektronikeinsatzes (10) ausgebildet ist.

3. Adaptervorrichtung (1) nach Anspruch 1 oder 2,
**dadurch gekennzeichnet, dass** das Konturelement (4) plattenförmig mit einer im Wesentlichen an die Querschnittsform des Messgerätegehäuses (20) angepasste Kontur ausgebildet ist.

4. Adaptervorrichtung (1) nach einem der vorherigen Ansprüche,
**dadurch gekennzeichnet, dass** das Konturelement (4) sternförmig mit einer im Wesentlichen an die Querschnittsform des Messgerätegehäuses (20) angepasster radialer Kontur ausgebildet ist.

5. Adaptervorrichtung (1) nach einem der vorhergehenden Ansprüche,
**dadurch gekennzeichnet, dass** das Konturelement (4, 5) mit Fixiermitteln, vorzugsweise mit Stiften, Absätzen und/oder Rasthaken ausgebildet ist, welche an entsprechenden Fixieraufnahmemitteln der Schnittstellenaufnahme (11, 21a) eingreifen.

6. Adaptervorrichtung (1) nach einem der vorhergehenden Ansprüche,
**dadurch gekennzeichnet, dass** das Trägerelement (2) als Trägerplatte, vorzugsweise als Leiterplatte ausgebildet ist.

7. Adaptervorrichtung (1) nach Anspruch 6,
**dadurch gekennzeichnet, dass** die Trägerplatte (2) als flexible Leiterplatte mit wenigstens einer Leiterbahn ausgebildet ist.

8. Adaptervorrichtung (1) nach einem der vorhergehenden Ansprüche,
**dadurch gekennzeichnet, dass** die Adaptervorrichtung (1) zum elektrischen Verbinden mit der Sensoreinheit (30) mit einer weiteren elektrischen Schnittstelle (7) ausgebildet ist.

9. Messgerätegehäuse (20), vorzugsweise für ein Füllstandmessgerät oder ein Druckmessgerät mit einer Adaptervorrichtung (1) nach einem der vorhergehenden Ansprüche.

## Claims

1. Adapter device (1) having a mechanical interface (3) as well as having an electrical interface (6) for electrical connection with an electronic insert (10) of a measuring device housing (20) having a sensor unit (30),
wherein
- the adapter device (1) comprises a carrier element (2), and
- the mechanical interface is formed for a mechanical fixing of the adapter device (1) to an interface receiver (11, 21a) of the electronic insert (10) and/or of the measuring device housing (20), as an elastic and non-electrically conductive casting compound (3) that partially encompasses the carrier element (2) of the adapter device (1), the casting compound (3) having at least one contour element (4,5) substantially adapted to the interface receiver (11, 21a) with contour precision, and producing a fixing operative connection with the same, **characterised in that** the contour element (4) is formed for the central fixing of the adapter device in the measuring device housing (20), having a contour that abuts onto the inner wall (21a) of the measuring device housing (20) forming the interface receiver and is supported elastically.

2. Adapter device (1) according to claim (1), **characterised in that** the contour element (5) is formed having a slot (5c) for the edge-side and elastically clamping reception of a plate-like carrier (12) of the electronic insert (10) forming the interface receiver (11).

3. Adapter device (1) according to claim 1 or 2, **characterised in that** the contour element (4) is formed to be plate-shaped, having a contour that is substantially adapted to the cross-sectional shape of the measuring device housing (20).

4. Adapter device (1) according to one of the preceding claims, **characterised in that** the contour element (4) is formed to be star-shaped, having a radial contour that is substantially adapted to the cross-sectional shape of the measuring device housing (20)

5. Adapter device (1) according to one of the preceding claims, **characterised in that** the contour element (4, 5) is formed having fixing agents, preferably having pins, recesses and/or locking hooks that engage on corresponding fixing receiving means of the interface receiver (11, 21a).

6. Adapter device (1) according to one of the preceding claims, **characterised in that** the carrier element (2) is formed as a carrier plate, preferably as a circuit board.

7. Adapter device (1) according to claim 6, **characterised in that** the carrier plate (2) is formed as a flexible circuit board having at least one conductor path.

8. Adapter device (1) according to one of the preceding claims, **characterised in that** the adapter device (1) is formed for the electrical connection with the sensor unit (30), having an additional electrical interface (7).

9. Measuring device housing (20), preferably for a filling level gauge or a pressure measuring device, having an adapter device (1) according to one of the preceding claims.

## Revendications

1. Dispositif adaptateur (1) comprenant une interface mécanique (3) ainsi qu'une interface électrique (6) destiné à permettre la liaison électrique avec un insert électronique (10) d'un boîtier d'un appareil de mesure (20) comprenant une unité de capteur (30),
dans lequel :
- le dispositif adaptateur (1) comprend un élément support (2), et
- l'interface mécanique est réalisée, pour permettre la fixation mécanique du dispositif adaptateur (1) sur un logement de réception d'interface (11, 21a) de l'insert électronique (10) et/ou du boîtier d'appareil de mesure (20), sous la forme d'une masse de coulée (3) élastique et non électriquement conductrice, entourant partiellement l'élément support (2) du dispositif adaptateur (1), ayant au moins un élément de profil (4, 5) adapté essentiellement précisément au profil du logement de réception (11, 21a) de l'interface et permettant d'obtenir une liaison de fixation active avec celui-ci, **caractérisé en ce que**
l'élément de profil (4) est réalisé pour permettre une fixation centrale du dispositif adaptateur (1) dans le boîtier d'appareil de mesure (20), avec un profil s'appliquant au moins partiellement sur la paroi interne (21a) du boîtier (20) d'appareil de mesure formant le logement de réception de l'interface, et s'appuyant élastiquement.

2. Dispositif adaptateur (1) conforme à la revendication 1,
**caractérisé en ce que**
l'élément de profil (5) est réalisé avec une fente (5c) pour permettre la réception côté bord et le blocage électrique d'un support (12) de l'insert électronique (10) en forme de plaque formant le logement de réception (11) de l'interface.

3. Dispositif adaptateur (1) conforme à la revendication 1 ou 2, **caractérisé en ce que**
l'élément de profil (4) est réalisé en forme de plaque avec un profil essentiellement adapté à la forme de la section du boîtier d'appareil de mesure (20).

4. Dispositif adaptateur (1) conforme à l'une des revendications précédentes,
**caractérisé en ce que**
l'élément de profil (4) est réalisé en forme d'étoile avec un profil radial essentiellement adapté à la forme de la section du boitier d'appareil de mesure (20).

5. Dispositif adaptateur (1) conforme à l'une des revendications précédentes,
**caractérisé en ce que**
l'élément de profil (4, 5) est réalisé avec des moyens de fixation, de préférence des broches, des talons et/ou des crochets d'encliquetage qui viennent en prise sur des moyens de réception de fixation correspondants du logement de réception (11, 21a) de l'interface.

6. Dispositif adaptateur (1) conforme à l'une des revendications précédentes,
**caractérisé en ce que**
l'élément support (2) est réalisé sous la forme d'une plaque support, de préférence d'une plaque conductrice.

7. Dispositif adaptateur (1) conforme à la revendication 6,
**caractérisé en ce que**
la plaque support (2) est réalisée sous la forme d'une plaque conductrice flexible ayant au moins une piste conductrice.

8. Dispositif adaptateur (1) conforme à l'une des revendications précédentes,
**caractérisé en ce qu'**
il est réalisé pour permettre la liaison électrique avec l'unité de capteur (30) par une autre interface électrique (7).

9. Boîtier d'appareil de mesure (20), de préférence destiné à un appareil de mesure de niveau ou à un appareil de mesure de pression, comprenant un dispositif adaptateur (1) conforme à l'une des revendications précédentes.
